# EUROPEAN PATENT SPECIFICATION

(11) **EP 2 063 163 B1**
(45) Date of publication and mention of the grant of the patent: **27.08.2014**
(21) Application number: 08169627.0
(22) Date of filing: 21.11.2008
(51) Int. Cl.: F16L 5/10

(54) **Sealing collar for vapour barrier lead-ins**
Dichtungsmanschette für Dampfbarrierenzuleitungen
Collier d'étanchéité pour zones d'entrée faisant barrière contre la vapeur

(30) Priority: 23.11.2007 DK 200701668
(43) Date of publication of application: 27.05.2009
(73) Proprietor: Dafa A/S, 8220 Brabrand (DK)
(72) Inventor: Jensen, Anders, 8220, Brabrand (DK)
(74) Representative: Tellefsen, Jens J.

(56) References cited:
- GB-A- 2 230 062
- US-A- 4 500 580

## Description

### Field of the Invention

The present invention relates to a sealing collar for securing efficient sealing along lead-ins of pipes, wires, and tubes through vapour barriers in order to obtain airtightness.

### Background of the Invention

The indoor climate is of importance for the health and well-being of the persons and animals staying or residing inside the building. Furthermore, the durability of building materials composed of organic material such as wood is prolonged by preventing warm, moist air from travelling from places with high temperatures to places with lower temperatures.

Problems arise when there is a significant temperature or vapour pressure differential from inside to out, which especially in northern climates may be a problem. Interior or exterior moisture penetrates into and condenses in unheated attics, basements, crawl-spaces, and wall cavities and causes the rotting of wood members, mould and fungus growth, and peeling or lifting of exterior paint.

Installing a vapour barrier prevents moisture from penetrating from the inside or outside to a place where it reaches a dew point since the vapour barrier physically prevents the moist air from travelling. The efficiency of the vapour barrier is dependent upon the mounting of the vapour barrier. Incorrect mounting or leaking due to a torn vapour barrier is more damaging than the lack of a vapour barrier since leakage may lead to an air flow through the membrane. The air will typically contain moisture, which moisture may condene in the insulation material and thereby render the insulation useless in an area around the leak, which may give rise to a thermal bridge, rot or other detrimental effects. Thus, it is a must that all lead-ins through the vapour barrier are efficiently sealed in order to prevent air transport and ensure airtightness according to building regulations.

The sealing of lead-ins is traditionally performed by the use of vapour barrier tape. However, this method is time-demanding and difficult for obtaining aesthetic and airtight fittings, especially on round or oval lead-ins.

Recently the authorities in Denmark among other countries has introduced standards relating to the building code, according to which a building shall be able to resist a certain interior over-pressure relative to ambient pressure outside the building, being a measurement of how well a building structure is sealed. This in combination with requirements to insulation values, window areas and other factors shall help to limit the energy consumption, while maintaining a comfortable indoor climate.

SE 521 671 C describes a sealing collar for tightly sealing around pipes in lead-ins especially in moisture forming rooms like bathrooms and swimming pools. The sealing collar comprises at least one pre-cut perforation. In order to obtain a tight fit it is important that the diameter of the perforation is slightly smaller than the diameter of the pipe. Thus, a different sealing collar is needed for different sizes of pipes.

JP 2004096964 describes a cable grommet that is water and moisture tight as well as air tight. The cable grommet contains a plurality of concentric circular cut-out grooves and circular portions with different diameters. The cable is led into a cable lead-in opening formed by cutting out one of the cut-out grooves that corresponds to the diameter of the cable. The grommet is placed upon the wall or floor through which the cable lead-ins occur.

GB-A-2 230 062 discloses a sealing coller comprising all the features of the preamble of claim 1.

### Object of the Invention

It is the object of the present invention to make a sealing collar with an airtight fitting for lead-ins of pipes, wires, and tubes through vapour barriers in order to obtain a fast and efficient sealing mechanism.

It is a further object of the invention to obtain a sealing collar, where one type of sealing collar is sufficient for multiple sizes of pipes, wires, or tubes.

It is a further object of the invention to obtain a sealing collar, which is easily and quickly attached to the vapour barrier with as minimal operations as possible.

### Description of the Invention

This invention describes a sealing collar for sealing lead-ins of cables, pipes, and tubes through a vapour barrier according to the features of claim 1.

In order to obtain an efficient and competent closure at the penetration area of the lead-ins of cables, pipes and tubes through a vapour barrier the closure around the cables, pipes and tubes is to be fitted tightly. This is achieved by providing the pre-punched markers with a smaller size as compared to the size of the cables, pipes and tubes. The flexible characteristics of the material enable the cables, pipes and tubes to be pushed through the material. The minimal size of the opening results in a tight fit between the sealing collar and the lead-in preventing air leakage.

Pre-punching of markers makes it easy to remove the marker of choice that fits with the lead-in. Installation of the sealing collar is, thus, performed without the need of additional tools or trouble achieving the right size of openings for the lead-in. This ensures that the size of the opening is sufficiently small in order to prevent air leakage around the lead-in. In addition, the pre-punching of more markers within the same sealing collar is possible, since the degree of pre-punching, preferably around 50%, is so low that air leakage is prevented when the additionally pre-punched markers are not used.

It is also facilitated by providing various size pre-punched markers, that more or less standard sealing collars may be used for a relative wide range of different pipe diameters.

Further avoidance of air leakage is dependent upon efficient sealing of the outer edges of the sealing collar to the vapour barrier. This is achieved by efficient means of attachment that may easily be attached to the vapour barrier upon installation. It is important that the means of attachment is practical and handy, in order for the installation procedure to be fast and easy.

Varying shapes of sealing collars is advantageous and the outer form may depend upon the place where the sealing collar is to be situated. As an example if the lead-ins are through the roof in one corner advantage is obtained by a triangular shape of the sealing collar. In other places, it is of advantage that the outer form of the sealing collar is of a circular or rectangular form.

The means for attachment to the vapour barrier comprises an adhesive or a vapour barrier tape.

In a further advantageous embodiment of the sealing collar, the means for attachment to the vapour barrier comprises an acryl-containing adhesive.

This acryl-containing adhesive is a highly sticky adhesive, which is especially developed for sealing and laminating vapour barriers of polyethylene and polypropylene. Furthermore, this adhesive is known to be stable within a wide temperature range, such as from -40 to +100 degrees Celsius. The adhesive is hence widely known and tested in accordance with the regulations regarding vapour barriers. This adhesive is advantageous in the form of vapour barrier tape as distributed by DAFA.

In a further advantageous embodiment of the sealing collar, the flexible material is of a thickness between 0.2 and 2.0 mm, more preferred between 1.0 and 1.5 mm, most preferred between 1.1 and 1.3 mm.

The main body of the sealing collar is composed of a flexible material. The handling of the sealing collar is dependent upon the characteristics of this flexible material. Thus, the thickness of the collar is important for the ease with which the sealing collar is situated in place. The thicker the material, the more stiffness the sealing collar contains and the more difficult it will be to fit it air tight to the vapour barrier and the lead-ins. On the other hand, if the thickness is small the sealing collar will also be difficult to handle because it is too bendable. In addition, if the flexible material is to thin, air leakage is more likely to happen due to insufficient closure/contact with the lead-ins as well as the leakiness of the membrane itself. Thus, a correct thickness is of major importance and is a balance between the listed disadvantages.

The flexible material is ethylene propylene diene monomer rubber. In a still further advantageous embodiment of the sealing collar, the diameter of the pre-punched markers is preferably between 15-70 % smaller than the diameter of the lead-ins.

Ethylene propylene diene monomer rubber (EPDM rubber) is an elastomer, which is characterized by a wide range of applications. The properties of EPDM rubber are ideal for the use as a flexible sealing collar since it is compatible with water as well as elastic in such a way as to lead to a sticking to the surface of the lead-ins through the vapour barrier such as cables, tubes or pipes. The elasticity of the material makes it ideal for fitting tightly to standard cables, tubes or pipes when the pre-punched markers are slightly smaller than the diameter of the lead-ins. Preferably, the diameter of the pre-punched markers are 15-70% smaller than the diameter of the lead-ins. More specifically, the pre-punched marker with a diameter of 55 mm is around 31% smaller than the diameter of 80 mm of the standard measures of the sealing box, the pre-punched marker with a diameter of 7 mm is around 30-68% smaller than the diameter between 10-22 mm of the standard measures of the cables, the pre-punched marker with a diameter of 60 mm is around 25-52% smaller than the diameter between 80-125 mm of the standard measures of the tubes, the pre-punched marker with a diameter of 100 mm is around 25-38% smaller than the diameter between 125-160 mm of the standard measures of the tubes, and the pre-punched marker with a diameter of 135 mm is around 16-33% smaller than the diameter between 160-200 mm of the standard measures of the tubes.

Furthermore, it is a well-known and well-characterised material with a relatively cheap market price. In addition, EPDM rubber is characterised by an elongation at failure of 430%, a tearing strength of 55KN/m and a tensile strength of 9,4 MPa.

EPDM can also stand temperatures between -45 to +130 degrees Celcius without a change of properties. It exhibits satisfactory compatibility with a large number of compounds including hot and cold water.

In a further advantageous embodiment of the sealing collar, the pre-punched markers are three concentrically arranged circles preferably with a diameter of 60, 100, and 135 mm, respectively.

The circular size of these three concentrically arranged circles fits with tubes of different sizes but still standard sizes for installations. A diameter of 60 mm fits with circular tubes of a diameter from 80 to 125 mm, while a pre-punched marker of 100 mm fits with circular tubes of a diameter from 125 to 160 mm as well as rectangular tubes of 100 mm x 150 mm and 150 mm x 150 mm. Installation of rectangular tubes demands additionally sealing with for example vapour barrier tape, in order to prevent air leakage. Finally, a pre-punched marker of 135 mm fits with circular tubes of a diameter of 160 to 200 mm.

Testing of airtightness of the sealing collar for the pre-punched markers 60 mm and 135 mm was performed for the minimal and maximal sizes of the circular tube lead-ins at 50 Pa. This revealed that an air flow along the outside of the tube had a size of 0.06-0.07 l/s per tube. As an example a standard home of 160 m² with 6 lead-ins of tubes and 4 lead-ins of cables would result in an air leakage of 0.2% of the maximal air flow allowed by the building regulations. This percentage is a maximal value, since the tubes tested are provided with grooves at the outer edge such as spiral-shaped grooves. Thus, the flexible membrane is not capable of fitting as tightly due to the groove like it is on tubes without grooves.

In a further advantageous embodiment of the sealing collar, the pre-punched markers are arranged as one circular marker preferably with a diameter of 55 mm within which four circular markers are arranged as corners of a square, said four circular markers preferably have a diameter of 7 mm, each.

The size of the circular markers fits with tubes of different sizes but still standard sizes for installations. The pre-punched marker with a diameter of 55 mm fits with a ceiling box with a diameter of 80 mm, while the markers having a diameter of 7 mm fit with wire and cables of a diameter of 10 to 22 mm such as flextubes, plastictubes, and quadratic cables.

Testing of airtightness of the sealing collar for the pre-punched markers 55 mm and 7 mm was performed. This revealed that an air flow along the outside of the tube was of a size of <0.01 I/s per tube at 50 Pa. As an example, a standard home of 160 m² with 6 lead-ins of tubes and 4 lead-ins of cables would result in an air leakage of 0.2% of the maximal air flow allowed by the building regulations. This percentage is a maximal value, since the tubes tested are provided with grooves at the outer edge such as spiral-shaped grooves. Thus, the flexible membrane is not capable of fitting as tightly due to the groove like it is on tubes without grooves.

This invention also claims a method for sealing lead-ins of cables, pipes, and tubes through a vapour barrier, where a sealing collar is attached to the vapour barrier, said sealing collar comprising a flexible elastic material with at least one pre-punched marker, said pre-punched marker having a diameter slightly smaller than the diameter of the lead-ins and being provided at the outer edge with means for attachment to the vapour barrier thereby preventing air flow through the vapour barrier by efficiently sealing the lead-ins, wherein the flexible elastic material is ethylene propylene diene monomer rubber (EPOM).

Mounting of the sealing collar starts by removing the pre-punched marker fitting with the tube for installation. Then, the sealing collar is situated around the tube and pulled until the vapour barrier is reached. The means for attachment are liberated for example by removing a covering piece of paper situated on the backside of for example vapour barrier tape. Finally, the sealing collar is smoothed starting from the tube, along the flexible membrane and towards the edge whereby the means for attachment are efficiently attached to the vapour barrier.

Sufficient airtightness of the vapour barrier is important for the function of the vapour barrier to prevent diffusion of moisture between warmer and cooler places such as the inside and outside of the house, following condensation, and possible growth of micro-organisms such as fungus. Perforations of the vapour barrier by lead-ins provide air flow and, hence, damage proper function of the vapour barrier. Efficient sealing of the lead-ins re-establishes the efficiency of the vapour barrier and can easily be obtained by the sealing collar.

### Description of the Drawing

- Figure 1: illustrates a schematic drawing of a sealing collar with three concentrically arranged circles.
- Figure 2: illustrates a schematic drawing of a sealing collar with one circle surrounding four smaller circles arranged as corners of a square.
- Figure 3: illustrates the effect of the pre-marked openings.
- Figure 4: illustrates a sealing collar with two lead-ins of minor tubes through the vapour barrier and the sealing collar.
- Figure 5: illustrates a sealing collar with one lead-in of a pipe through the vapour barrier and the sealing collar.

### Detailed Description of the Invention

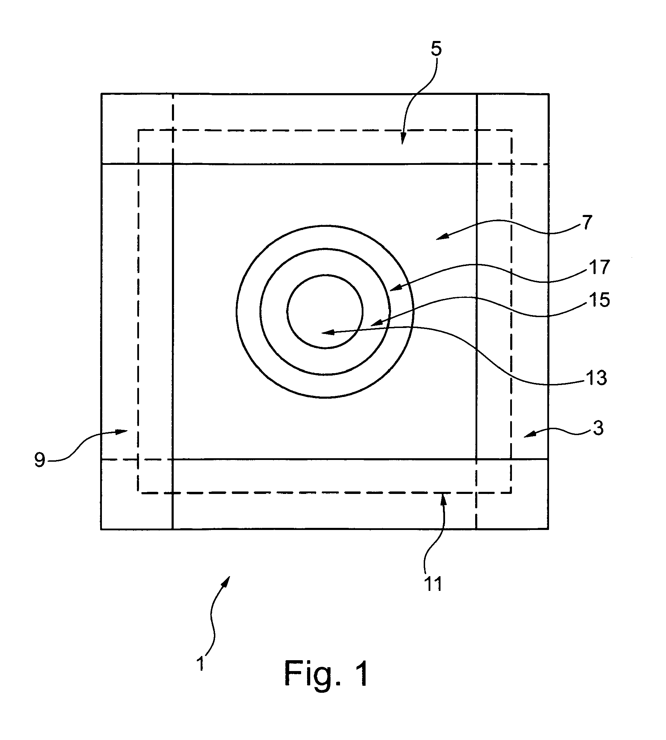

Figure 1 illustrates a possible embodiment of the sealing collar 1 with a rectangular form. Situated at the outer edges of the sealing collar is vapour barrier tape 3, which covers the outer edge 5 of the flexible membrane 7 and leaves a part of the vapour barrier tape 3 free for attachment with the vapour barrier 9. The vapour barrier tape 3 hereby seals the edge between the flexible membrane 11 and the vapour barrier. The vapour barrier tape 3 is ideal due to its properties to attach efficiently both with the flexible membrane 7 as well as the vapour barrier.

In this embodiment the flexible membrane 7 contains pre-punched concentrically arranged circles of a size of 60 mm 13, 100 mm 15, and 135 mm 17 for lead-ins of standard tubes. A diameter of 60 mm fits with circular tubes of a diameter from 80 to 125 mm, while a pre-punched marker of 100 mm fits with circular tubes of a diameter from 125 to 160 mm as well as rectangular tubes of 100 mm x 150 mm and 150 mm x 150 mm. Installation of rectangular tubes demands additionally sealing with for example vapour barrier tape, in order to prevent air leakage. This is not necessary for circular tubes. Finally, a pre-punched marker of 135 mm fits with circular tubes of a diameter of 160 to 200 mm.

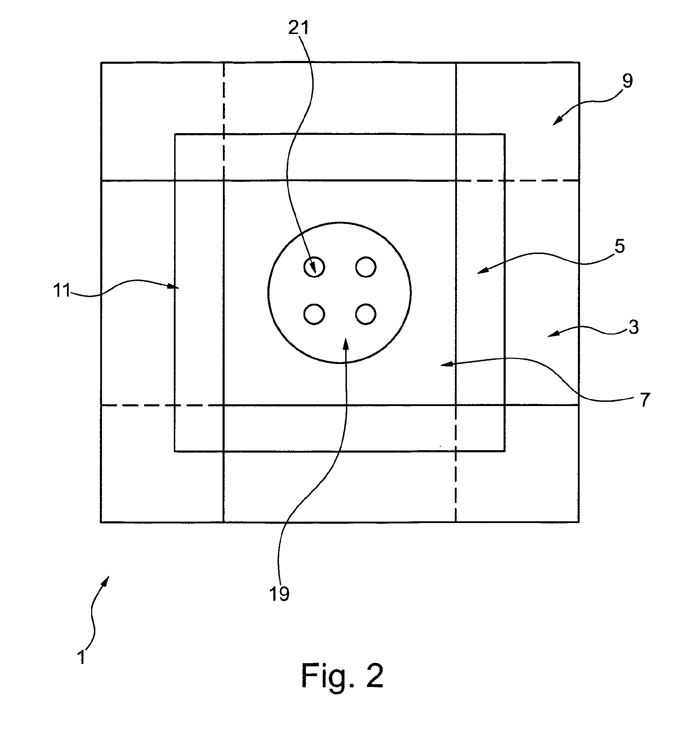

Figure 2 illustrates a possible embodiment of the sealing collar 1 with a rectangular form. Situated at the outer edges of the sealing collar is vapour barrier tape 3, which covers the outer edge 5 of the flexible membrane 7 and leaves a part of the vapour barrier tape 3 free for attachment with the vapour barrier 9. The vapour barrier tape 3 hereby seals the edge between the flexible membrane 11 and the vapour barrier.

In this embodiment, the flexible membrane 7 contains pre-punched markings arranged as a circle 19 with a diameter of 55 mm wherein four circles 21 are arranged as corners of a square. These circles each have a diameter of 7 mm. The circle with a diameter of 55 mm fits with a ceiling box with a diameter of 80 mm, while the circles of a diameter of 7 mm fit with wire and cables of a diameter of 10 to 22 mm such as flextubes, plastictubes, and quadratic cables.

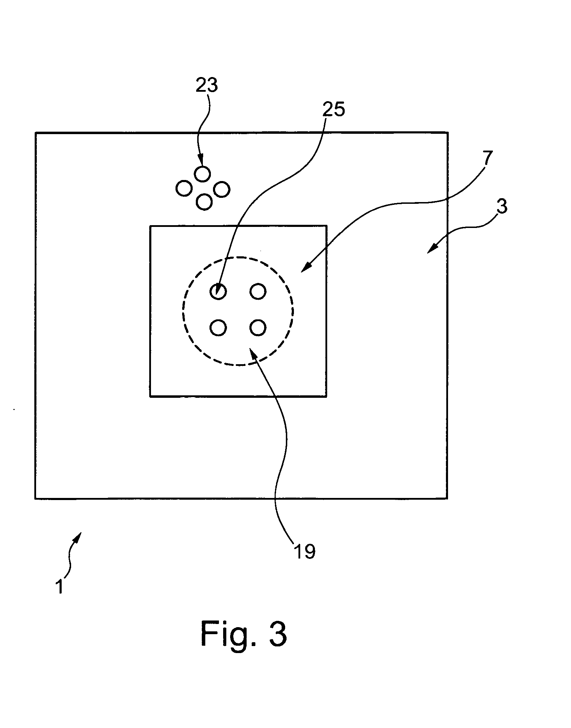

Figure 3 illustrates an embodiment of the sealing collar 1 similar to the one illustrated in figure 2. Situated at the outer edges of the sealing collar is vapour barrier tape 3, which covers the outer edge of the flexible membrane 7 and leaves a part of the vapour barrier tape 3 free for attachment with the vapour barrier. The vapour barrier tape 3 hereby seals the edge between the flexible membrane and the vapour barrier. The flexible membrane 7 contains pre-punched markings arranged as a circle 19 with a diameter of 55 mm wherein four circles 21 are arranged as corners of a square.

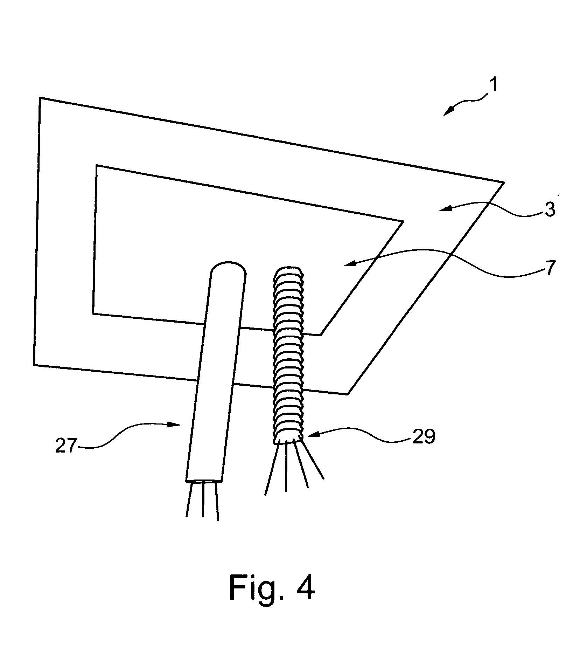

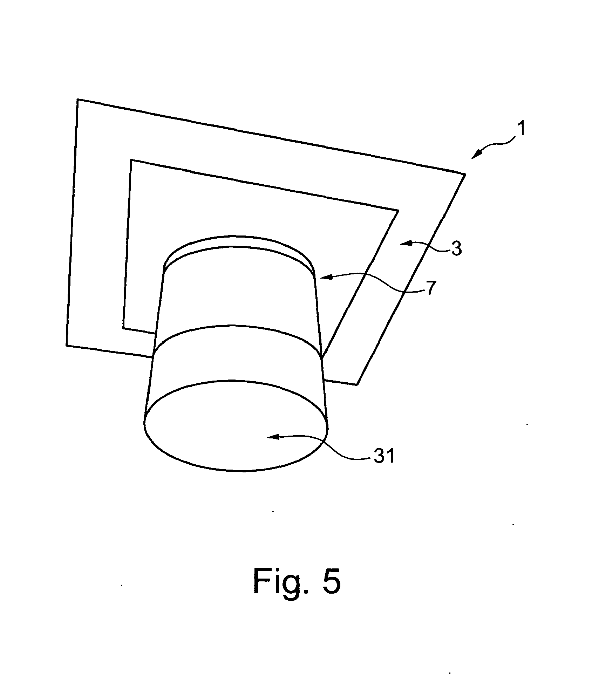

In this embodiment the four circles 21 have been removed and the removed pre-punched parts of the flexible membrane 23 are for the purpose of illustration placed on the vapour barrier tape 3. Removing the pre-punched markings is the first step during the mounting of the sealing collar 1. The next step is to lead cables through the openings 25 of the flexible membrane 7 and push the sealing collar towards the vapour barrier. At last the cover of the vapour barrier tape 3 is removed; the flexible membrane 7 is smoothened, and the vapour barrier tape 3 is attached to the vapour barrier as illustrated in figure 4 and figure 5.

Figure 4 further illustrates the possibility of different tubes to be lead through the flexible membrane 7. In this figure is illustrated a smooth tube 27 and a groove-containing tube 29 for electrical installations. Due to the grooves on the groove-containing tube 29 it is difficult for the flexible membrane 7 to fit exactly and with the same efficiency as on a smooth tube 27. However, this is only a minor problem, though an air leakage larger than on the smooth tube 27 is present; it is still of minor size. Hence, it still enables the sealing collar 1 to minimize the air flow to a size well below the allowable value.

Figure 5 illustrates the lead-in of larger tubes 31 around which the sealing collar 1 is mounted. Lead-ins through vapour membranes of larger tubes 31 are relevant for installations such as ventilation and suction for for example integrated vacuum cleaners or range hoods. Additionally, a further use for the sealing collar is for sealing lead-ins through other types of barriers like noise barriers.

## Claims

1. A sealing collar (1) for sealing lead-ins of cables, pipes, and tubes through a vapour barrier (9) wherein the sealing collar (1) comprises a flexible elastic material said flexible elastic material being provided at its outer edge (5) with an adhesive or a vapour barrier tape (3), **characterised in that** the flexible elastic material is provided with at least one pre-punched marker (13), said pre-punched marker (13) is punched partly through the flexible membrane (7), preferably 50% through the material, said pre-punched marker (13) having a diameter slightly smaller than the diameter of the lead-ins (27) and that
the flexible elastic material is ethylene propylene diene monomer rubber (EPDM).

2. The sealing collar (1) according to claim 1 **characterised in that** the adhesive or the vapour barrier tape (3) comprises an acryl-containing adhesive.

3. The sealing collar (1) according to claim 1 **characterised in that** the flexible elastic material is of a thickness between 0.2 and 2.0 mm, more preferred between 1.0 and 1.5 mm, most preferred between 1.1 and 1.3 mm.

4. The sealing collar (1) according to claim 1 **characterised in that** the diameter of the pre-punched markers (13) are preferably between 15-70 % smaller than the diameter of the lead-ins (27).

5. The sealing collar (1) according to claim 1 **characterised in that** the pre-punched markers are three concentrically arranged circles preferably with a diameter of 60 (13), 100 (15), and 135 mm (17), respectively.

6. The sealing collar (1) according to claim 1 **characterised in that** the pre-punched markers are arranged as one circular marker (19) preferably with a diameter of 55 mm within which four circular markers (21) are arranged as corners of a square, said four circular markers (21) preferably having a diameter of 7 mm, each.

7. A method for sealing lead-ins (27) of cables, pipes, and tubes through a vapour barrier (9) using a sealing collar (1) as claimed in any of the claims 1-6, wherein a sealing collar (1) is attached to the vapour barrier (9), said sealing collar (1) comprising a flexible elastic material being provided at its outer edge (5) with an adhesive or a vapour barrier tape (3) and **characterised in that** the flexible elastic material is provided with at least one pre-punched marker (13), said pre-punched marker (13) having a diameter slightly smaller than the diameter of the lead-ins (27) and that the flexible elastic material is ethylene popylene diene monomer rubber (EPDM)
thereby preventing air flow through the vapour barrier (9) by efficiently sealing the lead-ins (27).

## Patentansprüche

1. Dichtungsmanschette (1) zur Dichtung von Kabel-, Leitungs- und Rohr-Zuleitungen durch eine Dampfsperre (9), wobei die Dichtungsmanchette (1) ein flexibles, elastisches Material umfasst, wobei das flexible, elastische Material an seiner Aussenkante (5) einen Klebstoff oder ein Dampfsperre-Klebeband (3) aufweist, **dadurch gekennzeichnet, dass** das flexible, elastische Material mit wenigstens einer vorgeprägten Markierung (13) versehen ist, wobei die vorgeprägte Markierung (13) teilweise durch die flexible Membrane (7), vorzugsweise 50% durch das Material hindurch, gestanzt ist, wobei die vorgeprägte Markierung (13) einen etwas kleineren Durchmesser als den Durchmesser der Zuleitungen (27) aufweist, und dass das flexible, elastische Material Ethylen-Propylen-Dien-Monomerkautschuk (EPDM) ist.

2. Dichtungsmanschette (1) nach Anspruch 1, **dadurch gekennzeichnet, dass** der Klebstoff oder das Dampfsperre-Klebeband (3) einen akrylhaltigen Klebstoff enthält.

3. Dichtungsmanschette (1) nach Anspruch 1, **dadurch gekennzeichnet, dass** die Dicke des flexiblen, elastischen Materials von 0,2 bis 2,0 mm, bevorzugt von 1,0 bis 1,5 mm und am meisten bevorzugt von 1,1 bis 1,3 mm beträgt.

4. Dichtungsmanschette (1) nach Anspruch 1, **dadurch gekennzeichnet, dass** der Durchmesser der vorgeprägten Markierungen (13) vorzugsweise 15-70% kleiner als der Durchmesser der Zuleitungen (27) ist.

5. Dichtungsmanschette (1) nach Anspruch 1, **dadurch gekennzeichnet, dass** die vorgeprägten Markierungen drei konzentrisch angeordnete, vorzugsweise einen Durchmesser von 60 (13), 100 (15) bzw. 135 mm (17), aufweisende Kreise sind.

6. Dichtungsmanschette (1) nach Anspruch 1, **dadurch gekennzeichnet, dass** die vorgeprägten Markierungen als eine kreisförmige Markierung (19), vorzugsweise mit einem Durchmesser von 55 mm, angeordnet sind, worin vier kreisförmige Markierungen (21) als Ecken eines Vierecks angeordnet sind, wobei die vier kreisförmigen Markierungen (21) vorzugsweise jeweils einen Durchmesser von 7 mm aufweisen.

7. Verfahren zur Dichtung von Kabel-, Leitungs- und Rohrzuleitungen (27) durch eine Dampfsperre (9) bei der Verwendung einer Dichtungsmanschette (1) nach irgendeinem der Ansprüche 1-6, wobei eine Dichtungsmanschette (1) mit der Dampfsperre (9) verbunden ist, und die Dichtungsmanschette (1) ein flexibles, elastisches Material umfasst, das an seiner Aussenkante (5) einen Klebstoff oder ein Dampfsperre-Klebeband (3) aufweist, und **dadurch gekennzeichnet, dass** das flexible, elastische Material mit wenigstens einer vorgeprägten, einen etwas kleineren Durchmesser als den Durchmesser der Zuleitungen (27) aufweisenden Markierung (13) versehen ist, und dass das flexible, elastische Material Ethylen-Propylen-Dien-Monomerkautschuk (EPDM) ist, wobei eine Luftströmung durch die Dampfsperre (9) durch effektive Dichtung der Zuleitungen (27) verhindert wird.

## Revendications

1. Collier d'étanchéité (1) pour étancher des zones d'entrée de câbles, tuyaux et tubes traversant une barrière contre la vapeur (9), dans lequel le collier d'étanchéité (1) comprend un matériau flexible et élastique, ledit matériau flexible et élastique étant prévu sur son bord extérieur (5) à l'aide d'un adhésif ou une bande avec barrière contre la vapeur (3), **caractérisé en ce que** le matériau flexible et élastique est pourvu d'au moins un marqueur préperforé (13), ledit marqueur préperforé (13) est perforé en partie à travers la membrane flexible (7), de préférence 50 % à travers le matériau, ledit marqueur préperforé (13) ayant un diamètre légèrement inférieur au diamètre des zones d'entrée (27) et que le matériau flexible et élastique constitue un caoutchouc d'éthylène propylène diène monomère (EPDM).

2. Collier d'étanchéité (1) selon la revendication 1, **caractérisé en ce que** l'adhésif ou la bande avec barrière contre la vapeur (3) comprend un adhésif contenant un acrylique.

3. Collier d'étanchéité (1) selon la revendication 1 **caractérisé en ce que** le matériau flexible et élastique présente une épaisseur entre 0.2 et 2.0 mm, de préférence entre 1.0 et 1.5, de plus de préférence entre 1.1 et 1.3 mm.

4. Collier d'étanchéité (1) selon la revendication 1, **caractérisé en ce que** le diamètre des marqueurs préperforés (13) est de préférence entre 15 % et 70 % inférieur au diamètre des zones d'entrée (27).

5. Collier d'étanchéité (1) selon la revendication 1, **caractérisé en ce que** les marqueurs préperforés constituent trois cercles concentriques ayant un diamètre de préférence de 60 (13), 100 (15) et 135 mm (17) respectivement.

6. Collier d'étanchéité (1) selon la revendication 1, **caractérisé en ce que** les marqueurs préperforés sont aménagés comme un marqueur circulaire (19) ayant un diamètre de préférence de 55 mm à l'intérieur duquel sont aménagés quatre marqueurs circulaires (21) comme des angles disposés en carré, lesdits quatre marqueurs circulaires (21) ont de préférence un diamètre de 7 mm chacun.

7. Procédé pour étancher les zones d'entrée (27) de câbles, tuyaux et tubes traversant une barrière contre la vapeur (9) en utilisant un collier d'étanchéité (1) selon l'une quelconque des revendications 1 à 6, dans lequel un collier d'étanchéité (1) est attaché à la barrière contre la vapeur (9), ledit collier d'étanchéité (1) comprenant un matériau flexible et élastique étant prévu sur son bord extérieur (5) à l'aide d'un adhésif ou une bande avec barrière contre la vapeur (3) et **caractérisé en ce que** le matériau flexible et élastique est pourvu d'au moins un marqueur préperforé (13), ledit marqueur préperforé (13) ayant un diamètre légèrement inférieur au diamètre des zones d'entrée (27) et que le matériau flexible et élastique constitue un caoutchouc d'éthylène propylène diène monomère (EPDM), ainsi empêchant l'air de passer à travers la barrière contre la vapeur (9) en étanchant efficacement les zones d'entrée (27).
